# DEMANDE DE BREVET EUROPEEN

(11) **EP 2 056 196 A1**
(43) Date de publication de la demande: **06.05.2009**
(21) Numéro de dépôt: 08167164.6
(22) Date de dépôt: 21.10.2008
(51) Int. Cl.: G06F 9/46, G06F 9/44

(54) **Procédé de réalisation et de traitement d'appel de procédure, système et produit programme d'ordinateur correspondant**

(30) Priorité: 26.10.2007 FR 0758637
(71) Demandeur: FRANCE TELECOM, 75015 Paris (FR)
(72) Inventeur: Jacqueline, Nicolas, 35700, RENNES (FR); Fiquet, Olivier, 35135, RENNES (FR)
(74) Mandataire: Bioret, Ludovic

(57) **Abrégé**

L'invention concerne un procédé de réalisation d'un appel d'une procédure présente au sein d'au moins un premier module logiciel et requise par un deuxième module logiciel, dit module logiciel appelant.

Selon l'invention, un tel procédé met en oeuvre une méthode générique d'invocation de procédure, apte à appeler ladite procédure parmi une pluralité de procédures disponibles, en fonction d'un identifiant de ladite procédure à appeler, ledit module logiciel appelant et ladite méthode générique étant exécutables au sein d'un premier espace d'exécution d'un premier processus, dit espace local, et ce procédé comprend :
- une étape de recherche, à l'aide dudit identifiant, de ladite procédure parmi un ensemble de modules logiciels chargés au sein dudit espace local, fournissant une information de présence ;
- une étape d'exécution de ladite méthode générique, entraînant un transfert dudit appel vers un troisième module logiciel dudit espace local, dit module de transfert, lorsque ladite information de présence est négative ;
- une étape de transfert dudit appel par ledit module de transfert vers un second espace d'exécution d'un second processus, dit espace distant.

## Description

### 1 DOMAINE DE L'INVENTION

L'invention concerne notamment le domaine des architectures d'applications informatiques.

En particulier, l'invention concerne l'interopérabilité de composants logiciels en vue de la mise en oeuvre d'un service.

De manière usuelle, des applications informatiques sont composées de plusieurs briques logicielles qui peuvent être exécutées dans des processus différents, soit sur la même machine soit sur des machines distantes. Ainsi, il est fréquent de rencontrer des applications qui font appel à d'autres applications ou à des composants applicatifs aptes à rendre un service donné bien que ces composants soient situés sur d'autres machines ou d'autres réseaux. Il s'agit d'applications telles que des applications client/serveur (serveurs et clients pouvant d'ailleurs se trouver sur une même machine). Il peut également s'agir notamment d'applications basées sur l'utilisation de serveurs d'application, lesquels sont souvent répartis sur plusieurs machines appartenant à des réseaux de communication, tels qu'Internet. L'invention concerne l'architecture de telles applications et de tels composants applicatifs, encore appelés modules logiciels ou « plugins » dans la littérature. De manière générale, un « plugin » est un logiciel tiers venant s'interfacer à un logiciel principal afin de lui apporter de nouvelles fonctionnalités. Le logiciel principal fixe un standard d'échange d'informations auquel les plugins se soumettent.

Les modules logiciels peuvent notamment être exécutés dans des processus différents du processus de l'application principale ou sur des serveurs distants.

### 2 SOLUTIONS DE L'ART ANTERIEUR

Une application informatique, quels que soient les matériels et les systèmes d'exploitation utilisés, est dans un premier temps construite, par le biais d'un langage idoine, puis le plus souvent compilée, c'est-à-dire transformée en un langage utilisable par le matériel et le système d'exploitation cible.

Cette phase de compilation peut être réalisée préalablement à l'exécution de l'application ou directement lors de l'exécution : on utilise dans ce dernier cas un langage dit « interprété ».

Les dernières évolutions en matière d'architecture et de conception d'applications ont conduit à l'avènement de plusieurs techniques, dont l'utilisation massive de langages, par exemple dits « objet », et l'utilisation de plugins. Ces modules logiciels ne constituent généralement pas des applications à part entière, c'est-à-dire qu'ils ne sont pas aptes à être exécutés de manière autonome en dehors de tout autre contexte applicatif. Ils sont conçus pour rendre un service ou fournir une fonctionnalité à l'application qui les appelle. L'exécution de ce service ou de cette fonctionnalité peut, selon le matériel et les systèmes d'exploitation utilisés, être réalisée :
- soit dans l'espace mémoire de l'application « appelante » (encore appelée application principale),
- soit dans un espace mémoire différent, mais sur le même matériel,
- soit encore sur un autre matériel auquel le matériel hébergeant l'application appelante est connecté.

De nombreux mécanismes, tels que COM (de l'anglais "Component Object Model") et CORBA (de l'anglais « Common Object Request Broker Architecture »), définissent des architectures logicielles, pour le développement de ces composants et notamment pour de déploiement de tels composants dans une architecture de serveurs distribués au sein d'un réseau. Les composants sont assemblés afin de construire des applications complètes, composites et éclatées. Ils peuvent souvent être écrits dans des langages de programmation distincts et être exécutés dans des processus séparés ou être déployés sur des machines distinctes.

Ces techniques de l'art antérieur, telles que COM ou CORBA exigent également que les plugins respectent une charte prédéfinie (sous la forme d'une interface binaire figée). Une telle charte assure que le plugin en question sera à même de répondre aux sollicitations de l'application. Elle est souvent matérialisée par l'obligation, pour le plugin, d'intégrer un certain nombre de fonctions (ou d'interfaces) qui sont attendues par l'application principale. De telles chartes sont cependant figées et le développement de plugin est donc contraint par ces chartes.

Ces techniques de l'art antérieur permettent ainsi de créer des applications à base de composants réutilisables. Il est ainsi possible de construire une application en référençant des composants logiciels existants et déjà compilés et de les utiliser au sein de la nouvelle application. L'application principale est compilée et les références aux composants logiciels à utiliser sont insérées dans le code compilé de l'application. Ainsi, une fonction spécifique d'un composant logiciel à utiliser au sein de l'application appelante dispose d'un point d'entrée, sous la forme d'une adresse mémoire, au sein même de l'application appelante compilée.

Un inconvénient de ces techniques de construction et des architectures « distribuées » de l'art antérieur est lié à l'implémentation de normes de construction et d'interfaces de communications complexes. Des plus, ces implémentations doivent être réalisées tant au sein des applications principales que des composants logiciels distribués.

Il existe bien entendu de nombreux mécanismes, par exemple sous la forme de nombreux modèles de code, qui permettent de simplifier l'intégration de ces normes.

Ainsi, la technique connue d'utilisation de plugins dans des architectures distribuées selon l'art antérieur présente l'inconvénient que ces plugins sont liés à la norme en cours. Par exemple, lors d'une modification de la norme, ou de certains aspects de celle-ci, les modèles de codes précédemment utilisés deviennent rapidement caducs.

En outre, l'implémentation d'une norme au sein d'une application, nécessite des moyens informatiques conséquents et des compétences en architecture des systèmes d'information non négligeables.

De plus, les architectures distribuées nécessitent une adaptation du composant logiciel (d'origine) à la technologie choisie (modification du code source, écriture d'interfaces ou descripteurs spécifiques) et les composants logiciels issus de ces architectures sont limités en portabilité, et donc en interopérabilité : chaque technologie est restreinte à un ensemble de systèmes d'exploitation, la communication vers un système d'exploitation non supporté étant impossible.

### 3 RESUME DE L'INVENTION

La solution proposée par l'invention ne présente pas ces inconvénients de l'art antérieur. Elle concerne en effet un procédé de réalisation d'un appel d'une procédure présente au sein d'au moins un premier module logiciel et requise par un deuxième module logiciel, dit module logiciel appelant.

Selon l'invention, un tel procédé met en oeuvre une méthode générique d'invocation de procédure, apte à appeler ladite procédure parmi une pluralité de procédures disponibles, en fonction d'un identifiant de ladite procédure à appeler et ledit module logiciel appelant et ladite méthode générique étant exécutables au sein d'un premier espace d'exécution d'un premier processus appelant, dit espace local.

Un tel procédé de réalisation d'appel comprend en outre :
- une étape de recherche, à l'aide dudit identifiant, de ladite procédure parmi un ensemble de modules logiciels chargés au sein dudit espace local, fournissant une information de présence ;
- une étape d'exécution de ladite méthode générique, entraînant un transfert dudit appel vers un troisième module logiciel dudit espace local, dit module de transfert, lorsque ladite information de présence est négative ;
- une étape de transfert dudit appel par ledit module de transfert vers un second espace d'exécution d'un second processus, dit espace distant.

Ainsi, l'invention permet de gérer des situations d'exécution complexes. En effet, selon l'art antérieur, quand une application appelante fait appel à un module logiciel, elle se doit de connaître l'interface exportée par ce module logiciel. Cela signifie que l'application appelante doit utiliser de multiples interfaces pour réaliser des actions (ou faire réaliser ces actions par des modules logiciels) La connaissance et l'intégration de telles interfaces dans les applications appelantes est complexe mais si cette intégration n'est pas réalisée, l'application ne fonctionnera pas correctement, voire cessera totalement de fonctionner.

L'invention pallie cet inconvénient de l'art antérieur en permettant le transfert d'un appel de procédure, à un troisième module logiciel, qui est un module de « transfert », également appelé module « client » par la suite (car il requiert un service) chargé du transfert de l'appel lorsque aucun des modules logiciels chargé en local n'est à même d'exécuter cette procédure.

Selon un mode de réalisation particulier de l'invention, ledit procédé comprend, préalablement à ladite étape de recherche :
- une étape de construction d'une représentation spécifique dudit appel de ladite procédure, sous la forme d'un ensemble structuré de données comprenant au moins ledit identifiant de ladite procédure ;
- une étape de paramétrage de ladite méthode générique à partir de ladite représentation spécifique construite ;

Ainsi, le transfert est, selon l'invention, effectué sous la forme d'une structure de données (réalisée par exemple à l'aide d'un arbre typé et « valué » (qui comprend des valeurs)), assurant ainsi la stabilité de l'application appelante. En effet, l'utilisation de la méthode générique et d'un paramétrage de celle-ci à l'aide de la structure de données assure que le transfert s'effectue dans des conditions optimales car la procédure ne fait pas l'objet d'un appel direct, mais d'un appel par le biais de la méthode générique, unique interface d'appel de procédure.

De plus, l'invention permet d'identifier, par l'intermédiaire d'un paramètre (l'identifiant de la procédure) de la structure de données, la procédure à appeler et d'éviter par la suite un arrêt inopiné ou un blocage d'un module logiciel qui ne posséderait pas cette procédure. En effet, les modules logiciels auxquels il est fait appel sont destinés à reconnaître ou non le nom de la procédure qu'ils doivent mettre en oeuvre pour éviter ainsi un appel d'une procédure inexistante et par conséquence une mauvaise exécution.

Selon une caractéristique particulière de l'invention, ladite étape de transfert comprend :
- une étape de sérialisation, par ledit troisième module logiciel, de ladite représentation spécifique, délivrant une structure de données sérialisée ;
- une étape de transmission de ladite structure de données sérialisée vers un quatrième module logiciel s'exécutant au sein dudit espace distant.

Ainsi, à la différence des techniques de l'art antérieur, pour lesquelles il est nécessaire de mettre en oeuvre des architectures informatiques coûteuses et complexes, l'invention permet de réaliser une invocation (un appel) de procédure sans qu'il soit nécessaire de mettre en oeuvre un gestionnaire de procédure complexe. En effet, le procédé selon l'invention procède, dans un premier temps, à une recherche, au sein d'un espace d'exécution local, c'est-à-dire l'espace mémoire au sein duquel l'application s'exécute, de la procédure invoquée, parmi les procédures « invocables ». Les procédures « invocables » sont celles qui peuvent être appelées dans l'espace mémoire local de l'application en cours d'exécution.

Si la procédure invoquée ne fait pas partie de celles qui peuvent être appelées dans l'espace d'exécution local, c'est-à-dire qu'aucun des modules logiciels chargés localement n'est à même d'exécuter la procédure, le procédé selon l'invention transmet l'appel, après avoir sérialisé la représentation spécifique de l'appel en une structure de données sérialisée, à un quatrième module logiciel chargé de réaliser l'invocation. Ce quatrième module logiciel, également appelé module serveur (car il exécute un service sollicité par le module client) est présent au sein d'un processus distant, c'est-à-dire que ce processus hébergeant le quatrième module logiciel peut être mis en oeuvre au sein d'une machine distante de la machine qui met en oeuvre le premier processus. Il peut également s'agir d'un processus mis en oeuvre sur la même machine que le premier processus, mais dans des segments de mémoire différents.

Selon un mode de réalisation particulier de l'invention, ladite représentation spécifique comprend au moins un paramètre nécessaire audit appel qui comprend :
- un type dudit paramètre, appartenant à un ensemble de types prédéterminés ;
- une valeur dudit paramètre.

Ainsi, l'invention permet de qualifier, par un type et une valeur, chaque paramètre de la représentation spécifique utilisée par la méthode générique d'invocation. L'appel de la procédure est ainsi sécurisé et permet d'éviter par la suite un arrêt inopiné ou un blocage d'un module logiciel qui ne posséderait pas d'entrée pour cette procédure. En effet, les modules logiciels auxquels il est fait appel sont susceptibles de reconnaître ou non l'identifiant de la procédure qu'ils doivent mettre en oeuvre, de façon à éviter un appel d'une procédure inexistante et donc un arrêt inopiné ou un blocage. De plus, le typage des autres paramètres de la procédure assure que le module logiciel qui prendra en charge l'appel sera à même de vérifier que les paramètres qui lui sont fournis sont en adéquation avec ceux qui sont attendus, tant en terme de nombre que de types, par la procédure.

Selon une caractéristique particulière de l'invention, ladite structure de données sérialisée est construite selon le format XML.

Ainsi, l'invention permet, grâce à l'utilisation du format XML, de fournir une arborescence de paramètres extensible et typée qui autorise les modules logiciels auxquels il est fait appel à traiter les paramètres en fonction de leurs types. Ainsi par exemple, si le paramètre est fourni au module logiciel appelé sous la forme d'un entier, mais que la procédure attend un paramètre ayant la forme d'une chaîne de caractères, l'invention permet par exemple de réaliser une transformation de ce paramètre sous forme de chaîne, préalablement à l'appel de la procédure, et ainsi d'éviter l'instabilité de l'application.

Selon un mode de réalisation particulier de l'invention, ledit procédé, postérieurement à ladite étape de transfert, comprend :
- une étape de déconstruction d'une structure de données représentative d'au moins un résultat fourni par ledit quatrième module logiciel, fournissant au moins un résultat formaté ;
- une étape de traitement, par ledit module logiciel appelant, dudit au moins un résultat formaté.

Ainsi, l'invention rend transparent le traitement des résultats de la procédure, et ce, quel que soit le résultat renvoyé. En effet, dans l'hypothèse où la procédure renvoie un résultat qui ne correspond pas à celui qui serait attendu par le module logiciel appelant, l'invention permet d'isoler ces résultats inattendus en les fournissant sous un aspect formaté, plutôt que par une référence à une adresse. Ainsi, le module logiciel appelant n'est pas dans l'obligation de traiter tous les résultats de la procédure invoquée. En effet, si la procédure renvoie deux résultats, comme par exemple un entier et une chaîne de caractères, alors que le module appelant s'attendait à recevoir un seul et unique entier, les techniques de l'art antérieur vont fournir, en tant que résultat de la procédure, une adresse où trouver un entier et la chaîne correspondante (par exemple sous la forme de pointeurs). L'invention, a contrario, fournit deux résultats formatés, dont un seul est utilisé par le module appelant, ce qui garantit la stabilité de ce module appelant.

L'invention concerne également un procédé de traitement d'un appel d'une procédure présente au sein d'au moins un premier module logiciel et requise par un deuxième module logiciel, dit module logiciel appelant, comprenant une étape de transfert dudit appel par un troisième module logiciel s'exécutant au sein d'un premier espace d'exécution d'un premier processus.

Selon l'invention un tel procédé comprend en outre, dans un second espace d'exécution d'un second processus :
- une étape de réception dudit appel, sous la forme d'une structure de données, au sein d'un quatrième module logiciel ;
- une étape de recherche, au sein dudit second espace d'exécution, dudit au moins un premier module logiciel possédant une référence à ladite procédure, fournissant une information de présence ;
- une étape de mise en oeuvre de ladite procédure, au sein dudit premier module logiciel, lorsque ladite information de présence est positive.

Ainsi l'invention permet de prendre en charge l'exécution de la procédure, au niveau d'un deuxième processus différent du premier processus initial au sein duquel s'exécute l'application. En effet, le troisième module logiciel réalise la transmission de l'appel vers le quatrième module logiciel, qui est situé dans un espace d'exécution différent du premier module logiciel. Ce deuxième module logiciel se charge à son tour de rechercher le module logiciel apte à mettre en oeuvre la procédure invoquée au sein de son espace d'exécution et réalise cet appel lorsque le module logiciel recherché est présent.

Selon une caractéristique particulière de l'invention, ladite structure de données est sérialisée, et ledit procédé comprend, préalablement à ladite étape de recherche, une étape de déconstruction de ladite structure de données sérialisée, fournissant au moins un paramètre d'appel.

Dans ce cas, ladite étape de mise en oeuvre comprend une étape d'exécution de ladite procédure à l'aide dudit au moins un paramètre d'appel.

Ainsi, l'invention permet d'abstraire la connaissance des modules logiciels qui possèdent la procédure qui doit être exécutée. Il n'est donc plus nécessaire de connaître préalablement à l'appel le ou les modules qui « exportent », par le biais d'une interface, la procédure à exécuter. Le procédé selon l'invention se charge de rechercher, parmi les modules chargés en mémoire celui ou ceux qui exportent la procédure à exécuter. Une fois que le ou les modules logiciels ont été localisés, le procédé selon l'invention procède à la déconstruction de la représentation d'appel ce qui permet de fournir des paramètres qui sont « formatés » pour répondre aux attentes de la procédure.

L'exécution de la procédure est ensuite réalisée à l'aide des nouveaux paramètres d'appel formatés.

Selon une caractéristique particulière de l'invention, ladite étape de mise en oeuvre comprend en outre :
- une étape de construction d'une structure de données représentative d'au moins un résultat d'une exécution de ladite au moins une procédure ;
- une étape de transmission de ladite structure de données représentative dudit au moins un résultat, vers ledit module logiciel appelant.

Ainsi, l'invention permet également de simplifier la fourniture de résultats suite à l'exécution de la procédure. En effet, appliquant le principe de construction de représentation préalablement introduit, l'invention construit une représentation du résultat de l'exécution de la procédure qui est indépendant d'une adresse de référencement du résultat, tel que cela est le cas dans l'art antérieur. En effet, lors de l'utilisation d'interface d'appel de modules logiciels, les résultats fournis par la procédure sont également dépendants d'une adresse à laquelle le module logiciel appelant s'attend à recevoir les données d'un type particulier. L'invention contourne astucieusement cette limitation en sérialisant ces résultats et en les transmettant sous une forme sérialisée au module logiciel appelant. L'invention permet donc aux modules logiciels appelants et aux modules logiciels exécutants de s'abstraire totalement des interfaces requises par l'un et l'autre.

Selon un autre aspect, l'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de réalisation d'un appel tel que décrit précédemment.

L'invention concerne également un produit programme d'ordinateur téléchargeable depuis un réseau de communication et/ou stocké sur un support lisible par ordinateur et/ou exécutable par un microprocesseur, et comprenant des instructions de code de programme pour l'exécution du procédé de traitement d'un appel tel que décrit précédemment.

L'invention concerne également un système de réalisation d'un appel d'une procédure présente au sein d'au moins un premier module logiciel et requise par un deuxième module logiciel, dit module logiciel appelant.

Selon l'invention, un tel système comprend :
- des moyens de mise en oeuvre d'une méthode générique d'invocation de procédure, apte à appeler ladite procédure parmi une pluralité de procédures disponibles, en fonction d'un identifiant de ladite procédure à appeler,
- des moyens d'exécution dudit module logiciel appelant et de ladite méthode générique au sein d'un premier espace d'exécution d'un premier processus, dit espace local,
- des moyens de recherche de ladite procédure parmi un ensemble de modules logiciels chargés au sein dudit espace local, fournissant une information de présence ;
- des moyens d'exécution de ladite méthode générique, entraînant un transfert dudit appel vers un troisième module logiciel dudit espace local, dit module de transfert, lorsque ladite information de présence est négative ;
- des moyens de transfert dudit appel par ledit module de transfert vers un second espace d'exécution d'un second processus, dit espace distant.

Selon un mode de réalisation particulier de l'invention, ledit système comprend :
- des moyens de réception dudit appel, sous la forme d'une structure de données, au sein d'un quatrième module logiciel ;
- des moyens de recherche, au sein dudit second espace d'exécution, dudit au moins un premier module logiciel possédant une référence à ladite procédure, fournissant une information de présence ;
- des moyens de mise en oeuvre de ladite procédure, au sein dudit premier module logiciel, lorsque ladite information de présence est positive.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1A présente un synoptique d'un appel de procédure au sein d'un module logiciel selon les techniques de l'art antérieur ;
- la figure 1B présente un synoptique d'un appel de procédure au sein d'un module logiciel selon une technique de sérialisation ;
- la figure 2 illustre un exemple d'appel dans un mode de réalisation particulier du procédé de sérialisation ;
- la figure 3A présente un exemple de mise en oeuvre du procédé de l'invention à l'aide d'un module logiciel dédié ;
- la figure 3B présente un équivalent, en terme d'architecture logique, de la mise en oeuvre du procédé selon l'invention tel que présenté en figure 3A ;
- la figure 4 décrit un exemple d'enchaînement de commandes selon l'invention.

### 5 DESCRIPTION DETAILLEE DE L'INVENTION

### 5.1 Principe général de l'invention

L'invention permet de répondre aux exigences de mise en oeuvre de services distants sans nécessiter d'architecture complexe et coûteuse tel que cela est le cas pour les architectures de l'art antérieur.

En effet, l'invention autorise l'appel de procédures distantes par le biais d'un module logiciel simple, spécifiquement dédié à cet effet. Cependant, il n'est pas nécessaire, pour l'application ou le processus qui cherche à appeler une procédure particulière, de posséder des connaissances particulières concernant cette procédure (par exemple savoir si elle est locale ou distante).

En effet, l'invention permet de se passer de cette connaissance en fournissant, à un intermédiaire, des données concernant la procédure et les paramètres pour son exécution. Ces données sont contenues dans une structure de données spécifique qui est une représentation spécifique d'appel. Cela signifie que l'appel de procédure n'est pas réalisé en « binaire » mais est transformé en une structure de données, qui contient notamment le nom de la procédure que le processus souhaite invoquer.

Le procédé selon l'invention recherche alors, au sein d'un processus local, des modules logiciels qui peuvent mettre en oeuvre la procédure. Si aucun des modules logiciels locaux (c'est-à-dire chargé dans l'espace mémoire de l'application appelante) n'est à même d'exécuter la procédure (par exemple parce qu'elle n'est pas implémentée), le procédé selon l'invention passe l'appel à un module logiciel (qui pourrait être qualifié « de transfert » ou « module logiciel client » et que plus loin nous désignons, dans un mode de réalisation particulier, module MRPC), c'est-à-dire qu'il invoque un module qui prend en charge l'appel en dernier ressort. Ce premier module logiciel « de transfert », ou « module logiciel client », communique alors avec un deuxième module logiciel « serveur » en fournissant les paramètres d'appel, par exemple sous la forme d'une série (c'est-à-dire que la structure de données d'appel est sérialisée préalablement à son expédition vers le module logiciel serveur).

Dans d'autres modes de réalisation de l'invention, l'appel au module logiciel de « transfert » peut être réalisé en parallèle et il n'est pas obligatoire d'attendre que chaque module logiciel « local » ait répondu qu'il n'était pas à même d'exécuter la procédure demandée pour passer l'appel au module logiciel de « transfert ».

Le deuxième module logiciel, qui est également un module logiciel de « transfert », peut soit être exécuté au sein d'un processus se trouvant sur la même machine physique que le processus « appelant » (le processus client). Il peut également être situé au sein d'un processus « distant » s'exécutant sur une machine distante, à laquelle la machine hébergeant le processus mettant en oeuvre le module logiciel client est connectée, par le biais d'un réseau de communication.

L'invention n'est donc nullement limitée à une mise en oeuvre de type « client/serveur » au sein d'un réseau ou à une mise en oeuvre qui n'impliquerait que des processus qui s'exécutent sur une seule et unique machine physique.

On rappelle, dans le cadre de cette invention, qu'un « client » doit être considéré comme une entité qui requiert un service auprès d'une autre entité dite « serveur ». Un service est, dans le cas de la présente invention, matérialisé par une procédure (également appelée « fonction » ou « méthode ») qui est exécutable par un module logiciel. Ainsi, un « client » peut également jouer un rôle de serveur quand un autre module logiciel lui demande un service. C'est pour cette raison qu'il est plutôt fait référence à un « premier » et un « deuxième » module logiciel.

Le deuxième module logiciel « serveur » reçoit de la part du premier module logiciel « client » un ensemble d'informations permettant d'identifier la procédure à exécuter ainsi que ses éventuels paramètres. Le deuxième module logiciel « serveur » effectue à son tour une recherche, parmi les différents modules logiciels chargés, d'un ou plusieurs modules susceptibles d'exécuter la procédure. S'il en trouve un, il transmet l'appel à ce module « d'exécution » qui met en oeuvre la procédure en question puis renvoie un résultat éventuel au premier module logiciel par le biais du deuxième module logiciel.

Selon les modes de mise en oeuvre de l'invention, les modules logiciel serveurs et clients peuvent chacun s'interfacer avec leurs environnements respectifs par le biais d'un noyau applicatif. Ainsi, un tel noyau applicatif « client » est alors chargé de l'activation du module logiciel client au sein de l'environnement de l'application appelante. Un noyau applicatif « serveur » est également chargé de l'activation du module logiciel serveur au sein de l'environnement de l'application « serveur ».

Par exemple, dans ce mode de réalisation de l'invention, on considère une procédure P1 qui doit être exécutée par une application cliente. Cette application cliente a chargé en local, au sein de son processus d'exécution, des modules logiciels. Le noyau applicatif de l'application cliente réalise une recherche de la procédure P1 par interrogation successive des modules logiciels chargés. Si aucun de ces modules logiciels « locaux » n'est à même d'exécuter la procédure P1, le noyau applicatif envoie l'appel au premier module logiciel autorisant l'appel de procédure distante (module également chargé en local au sein du processus d'exécution de l'application cliente). Ce premier module logiciel transfère l'appel de la procédure P1 à un deuxième module logiciel, qui est lui-même chargé au sein d'un processus d'exécution d'un noyau applicatif « distant ». Le deuxième module logiciel transfère l'appel de la procédure P1 au noyau applicatif distant qui se charge alors de réaliser une recherche de la procédure P1 par interrogation successive des modules logiciels « distants » chargés dans le processus d'exécution du noyau applicatif « distant ».

Le premier et le deuxième module logiciel respectivement de l'application locale et de l'application distante permettent de faire communiquer les deux noyaux applicatifs de manière transparente, de sorte que l'application « cliente » n'est même pas informée du transfert de la demande d'exécution de la procédure P1 à un processus distant.

Il est bien entendu que le procédé de l'invention peut être mis en oeuvre dans le cadre d'une chaîne d'invocations, de sorte que si le deuxième module logiciel auquel il est fait appel n'est pas à même d'identifier, lors de sa recherche, un module logiciel apte à mettre en oeuvre la procédure demandée, il peut à son tour mettre en oeuvre la procédé de l'invention afin de transférer à nouveau l'appel de procédure à un troisième module logiciel.

L'invention se distingue donc des techniques de l'art antérieur puisque très peu de paramètres sont nécessaires à la mise en oeuvre de l'architecture d'appel précédemment décrite. En effet, pour pouvoir transmettre, selon l'invention, un appel de procédure à un deuxième processus, seule la localisation de ce deuxième processus est nécessaire. Dans le cadre d'un deuxième processus s'exécutant sur la même machine que le premier, seul un identifiant de ce deuxième processus est nécessaire (par exemple un nom). Dans le cadre d'un deuxième processus s'exécutant sur une machine distante, seuls une adresse de la machine et un nom de processus sont nécessaires.

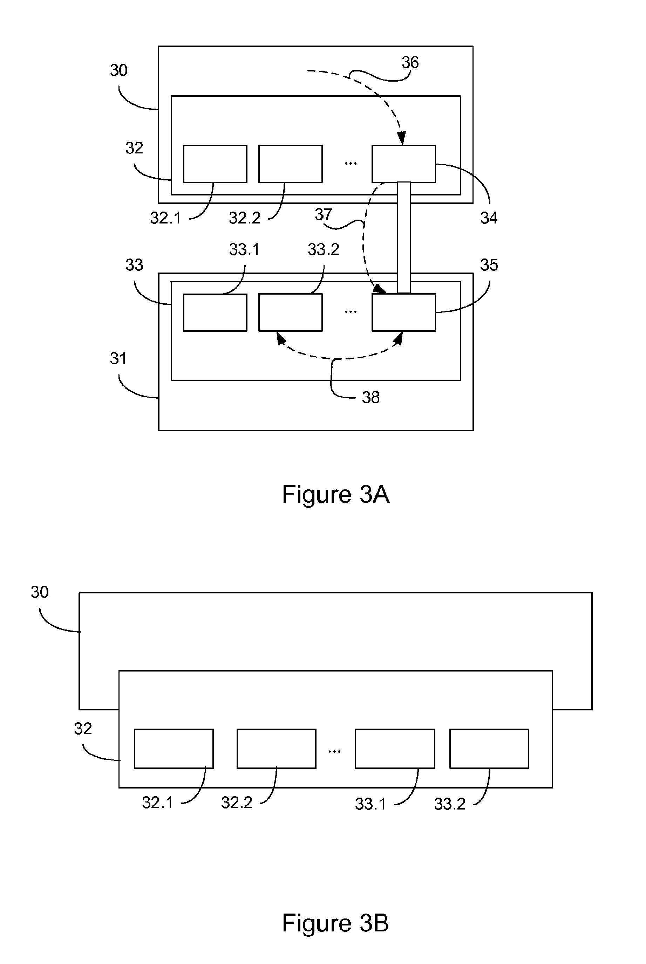

On présente, en relation avec la figure 3A, un exemple de mise en oeuvre du procédé de l'invention.

Deux processus PA 30 et PB 31 souhaitent communiquer entre eux. PA 30 est appelé "processus client", et PB 31 "processus serveur". PA 30 et PB 31 peuvent être hébergés sur une même machine, ou sur deux machines différentes, connectées par réseau. Un module logiciel MRPC est chargé et configuré côté client 34 (PA 30) et côté serveur 35 (PB 31), chacun au sein d'un noyau applicatif 32, 33, comprenant d'autres modules logiciels (32-1, 32-2, 33-1, 33-2).

Lorsque le processus PA 30 réalise (36) un appel qui ne peut être traité par le noyau 32 (car aucun des modules chargés ne connaît la procédure à exécuter), le module logiciel MRPC 34 transmet (37) l'appel (par le biais de la structure d'appel sérialisée) au module logiciel MRPC 35 qui, lance l'appel et retourne le résultat (38).

Dans cet exemple, la communication est unidirectionnelle (principe de client/serveur : PA 30 vers PB 31). Toutefois, un processus peut être à la fois client et serveur, ce qui permet la communication bidirectionnelle (entre PA 30 et PB 31, dans les deux sens).

Ainsi, comme exposé en figure 3B, du point de vue de l'appelant 30 (Processus A), il n'y a absolument aucune différence entre un appel traité directement par un module logiciel du processus A, et un appel qui aurait transité, via le module logiciel MRPC 34, vers l'appelé 31 (processus B) pour être traité par un module logiciel du processus B.

La configuration présentée en figure 3A (processus A + processus B reliés par des modules MRPC) est donc strictement équivalente à la configuration présentée en figure 3B (le processus A contient les modules logiciels du processus B ci-dessus, mais sans module logiciel MRPC).

En cela on peut donc qualifier le procédé selon l'invention de transparent car :
- Aucune modification de l'appelant (Processus A et les modules logiciels du processus A) n'est nécessaire pour réaliser des appels à distance (sur les modules logiciels du processus B) ;
- Aucune modification des appelés (Processus B et des modules logiciels du processus B) n'est nécessaire pour pouvoir être appelés à distance.

Le simple ajout d'un module logiciel spécifique, appelé module MRPC, au noyau qui met en oeuvre le procédé de l'invention, suffit à rendre l'application « communicante ».

Par la suite, on présente notamment un mode de réalisation de l'invention. Il est clair cependant que l'invention ne se limite pas à cette application particulière, mais peut également être mise en oeuvre dans de nombreuses autres formes et plus généralement dans tous les cas où les avantages présentés par l'invention sont intéressants.

### 5.2 Présentation d'un mode de réalisation

Dans ce mode de réalisation, le procédé selon l'invention est combiné à une mise en oeuvre particulière et ingénieuse d'une forme d'appel de procédures. Cette forme d'appel a été mise au point par les inventeurs et trouve une application particulière dans le cadre de cette mise en oeuvre du procédé de l'invention. Cette technique peut être résumée comme étant une « sérialisation des appels », qui est présentée plus loin.

Dans ce mode de réalisation de l'invention, on distingue deux types d'appels de procédure différents :
- Les "commandes" : ce sont les services offerts par le module logiciel (appels de procédure, méthode, fonction sur des modules logiciels). L'application ou d'autres modules logiciels invoquent ces commandes pour demander au module logiciel de réaliser des traitements.
- Les "notifications" : ce sont les évènements que le module logiciel peut lever. L'application ou les autres modules logiciels s'abonnent à ces évènements, et sont notifiés par le module logiciel appelant lorsqu'il lève ces évènements. La notification est donc émise vers l'application ou vers d'autres modules logiciels lorsqu'un évènement particulier se produit.

### 5.2.1 Recherche et transfert d'appels

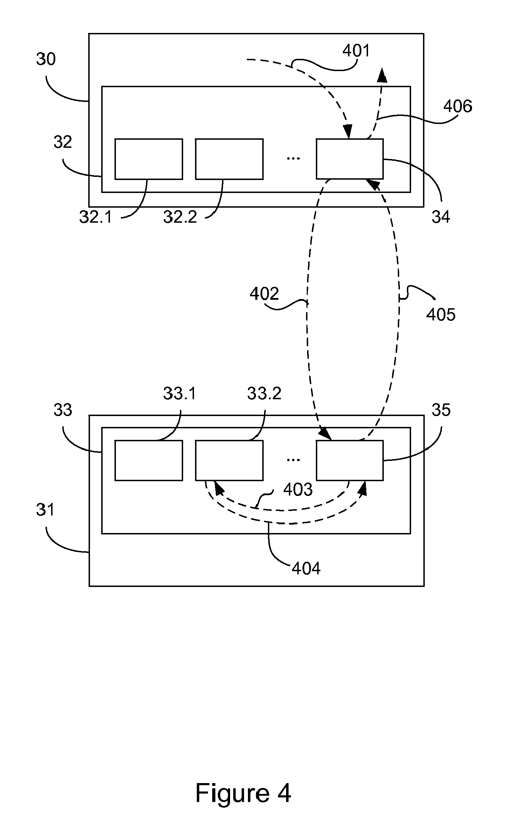

On présente, en relation avec la figure 4, un exemple d'enchaînement de commandes selon l'invention (les références des figures 3A et 3B ont été conservées).
- Postérieurement à une étape de recherche, le premier module logiciel MRPC client 34 reçoit (401), par l'intermédiaire du noyau applicatif 32, toutes les commandes qui n'ont pas pu être traitées par les autres modules logiciels du processus PA 30. Lorsque le module logiciel MRPC client 34 reçoit une commande, c'est donc qu'elle ne peut pas être traitée côté client ;
- Le module logiciel MRPC client 34 transmet (402) au module logiciel MRPC serveur 35 cette commande, selon un protocole, dit « protocole MRPC ». La structure de données représentative de l'appel à réaliser est « sérialisée » ;
- Le module logiciel MRPC serveur 35 reçoit cette commande et la transmet au processus serveur PB 31, par l'intermédiaire de son noyau applicatif 33. Le processus PB 31, toujours par l'intermédiaire de son noyau applicatif 33, traite (403) la commande de façon à ce que:

- le module logiciel MRPC serveur 35 déconstruit (désérialise) la structure de données représentative de l'appel précédemment sérialisée ;
- le module logiciel MRPC serveur 35 transmet la structure de données désérialisée à ses modules logiciels associés (le ou les modules qui sont susceptibles de traiter la commande par l'intermédiaire du noyau applicatif 33) pour traitement ;
- Le module logiciel qui traite la commande, par exemple le module logiciel 33-2, retourne (404) le résultat au module logiciel MRPC serveur 35, toujours par l'intermédiaire du noyau applicatif 33. Le module logiciel MRPC serveur 35 retourne à son tour (405) le résultat de la commande au module logiciel MRPC client 34 en suivant le protocole MRPC qui le retourne (406) au processus client 30 pour traitement, par l'intermédiaire de son noyau applicatif 32.

### 5.2.2 Protocole MRPC

Dans ce mode de réalisation, le protocole MRPC permet l'échange de commandes et de notifications entre deux processus (qui peuvent respectivement s'exécuter sur la même machine ou sur des machines distantes). Il s'appuie sur le fait que les commandes et notifications n'utilisent que les types simples du langage, ce qui les rend sérialisables, c'est-à-dire représentables sous forme textuelle, et transportables d'un espace mémoire à un autre. Cet aspect de sérialisation est décrit par la suite.

Ainsi, dans ce mode de réalisation, le protocole MRPC est un protocole texte, sous forme de flux XML. Par exemple, la commande suivante (préalablement sérialisée) :

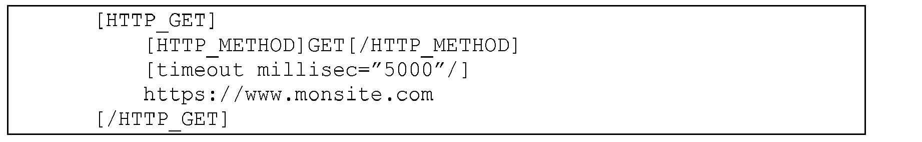

est transformée en le paquet MRPC suivant :

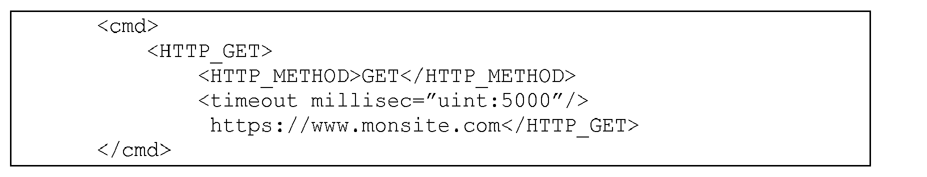

Pour ce qui est des notifications, la notification suivante :

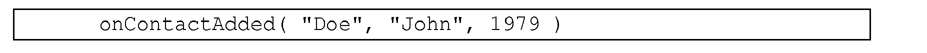

est transformée en le paquet MRPC suivant :

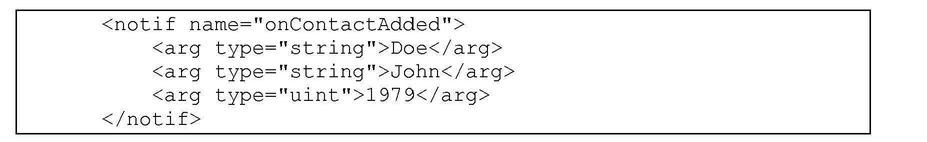

### 5.2.3 Gestion des unités d'exécution (de l'anglais « Mapping de

### threads »)

Dans ce mode de réalisation de l'invention, les modules logiciels MRPC gèrent une correspondance entre threads (« unités d'exécution ») client et threads serveur (algorithme et politique de correspondance de threads spécifique) pour garantir la disponibilité du serveur et éviter les blocages au niveau du client si le serveur est déjà occupé à traiter un appel du client. Ainsi, lors d'un transfert d'appel de procédure à un module logiciel de type MRPC, le processus appelant est assuré de ne pas voir son exécution bloquée par l'appel à un processus serveur.

### 5.2.4 « Push » de notifications

Dans un mode de réalisation particulier de l'invention, il est possible de permettre à plusieurs processus clients de recevoir les notifications d'un unique processus serveur.

### 5.2.5 Sérialisation des appels

La sérialisation des appels permet de répondre aux exigences contradictoires de flexibilité et de réutilisabilité des modules logiciels tout en garantissant une stabilité de fonctionnement optimale des applications informatiques qui font appel à ces mêmes modules logiciels. La sérialisation des appels permet ainsi aux architectes et aux concepteurs d'applications d'utiliser des modules logiciels précompilés sans qu'il soit nécessaire, lors du développement de ces applications, de respecter une charte d'appel rigide ou d'importer toutes les interfaces des différents modules logiciels à utiliser dans l'application. On peut également noter que la sérialisation des appels permet tout à la fois un appel de procédure, qui se trouve dans un module logiciel, par une application principale qu'un appel de procédure, qui se trouve dans un autre module logiciel, par un module logiciel. En d'autres termes, la sérialisation des appels permet d'établir une plateforme commune d'appels de procédures, quel que soit l'endroit où elles sont situées.

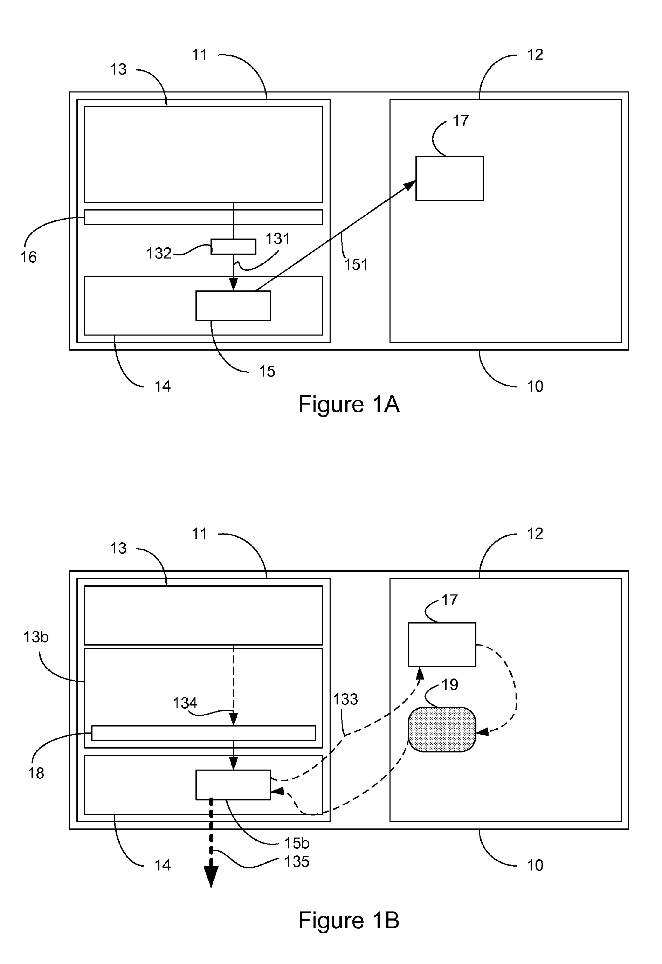

On présente, en relation avec les figures 1A et 1B, une illustration des effets produits par la sérialisation des appels. Dans les figures 1A et 1B, on présente une application informatique en cours d'exécution dans un espace mémoire 10 du système d'exploitation. Cet espace mémoire 10 comprend deux segments : un segment 11 réservé à l'exécution de l'application et un segment 12 contenant les données et variables d'exécution. Ce segment d'exécution 11 comprend:
- un module logiciel 13 qui contient le code de l'application principale,
- et un module logiciel 14, qui contient une procédure 15 implémentant une fonctionnalité F particulière.

Selon les techniques de l'art antérieur, succinctement représentées en figure 1A, lorsque l'application principale 13 souhaite faire appel (131) à la procédure 15 du module logiciel 14, elle utilise l'interface 16 d'appel de cette fonction, interface avec laquelle l'application principale13 a été compilée. Cette interface 16 indique les paramètres à passer à la procédure 15 pour exécuter la fonctionnalité F. L'application principale13 indique (132) au module logiciel 14, un emplacement en mémoire 17 dans le segment de données 12 où trouver le ou les paramètres nécessaires. La procédure 15 lit (151) alors ces paramètres 17 et s'exécute.

Ainsi, par exemple, si le module logiciel 14 a été recompilé et que la procédure 15 attend non pas un, mais deux paramètres, et que l'application principale 13 n'a pas été recompilée avec la nouvelle interface du module logiciel 14, l'adresse indiquée (132) est complétée au hasard par le système d'exploitation (ou l'environnement applicatif) par des informations (adresses, données, ...) fantaisistes pouvant entraîner une exécution erronée, un arrêt inopiné ou un blocage.

Le principe de la sérialisation des appels, mis en oeuvre par les modules MRPC selon l'invention et illustré en figure 1B, dans laquelle un noyau applicatif 13b se place en coupure du code de l'application 13 et du module logiciel 14. Le principe de l'invention consiste dans un premier temps, pour le module logiciel 14, à construire (133) une représentation 19 de l'appel à réaliser, c'est-à-dire à sérialiser les paramètres 17. Dans le domaine de la programmation, la construction d'une représentation (également appelée sérialisation) est l'opération qui consiste à représenter l'état d'un objet sous la forme d'une "série". Cette forme doit être suffisante pour permettre de reconstruire l'objet. La sérialisation est utile pour obtenir une persistance simple qui permet d'archiver les objets dans des fichiers texte ou dans des bases de données.

L'homme du métier utilise par exemple cette sérialisation dans la programmation dite « objet » pour pouvoir enregistrer des états d'objets suite à la validation de transactions ou à la fermeture d'applications. Ainsi, par exemple, si on considère un objet (au sens de la programmation « objet ») « table » représenté dans un espace mémoire de l'application, par une hauteur H, une longueur L, une profondeur P et une forme F, la sérialisation de cet objet consiste en la création d'un terme (par exemple une chaîne de caractère) tel que « TableHLPF », apte à être sauvegardé.

Les inventeurs ont eu l'ingénieuse idée d'adapter ce principe de sérialisation, non pas pour enregistrer des objets, mais pour transformer des paramètres présents dans un espace mémoire 10. Ainsi, la première étape de sérialisation du procédé de sérialisation des appels construit (133) une représentation spécifique 19 des paramètres nécessaires à l'appel d'une procédure 15b, dont l'objet est de transférer (135) l'appel de la procédure 15 de la figure 1A vers un module logiciel distant (non représenté). Ce dernier est apte à exécuter cette procédure 15, absente des modules logiciels chargés dans le segment 11 d'exécution de l'application. Cette construction s'accompagne également de l'insertion, dans la représentation spécifique 19, du nom de la procédure 15 à appeler, permettant d'obtenir un ensemble de paramètres sérialisés.

La sérialisation est préalablement et astucieusement couplée à une invocation (134) d'une méthode d'appel générique 18 faisant office de lien générique avec le module logiciel 14 contenant la procédure 15b. L'invocation (134) de la méthode d'appel générique 18 entraîne la construction, par le module logiciel 14, de la représentation spécifique 19 et la mise en oeuvre transparente du module distant. Selon les modes de réalisation de la sérialisation des appels, la méthode d'appel générique peut par exemple transférer les paramètres 17 et laisser le module logiciel 14 sérialiser les paramètres en question et appeler la procédure 15b (qui va transférer l'appel de la procédure 15).

Dans certaines variantes de réalisation, lorsque l'exécution de la procédure 15 du module logiciel distant (non représenté) produit des résultats, ces résultats font également l'objet d'une construction d'une représentation spécifique, selon des principes similaires à la représentation spécifique d'appel, avant d'être transmis, par l'intermédiaire du noyau 13b, à l'application principale 13. L'application principale 13 réalise une déconstruction de la représentation spécifique des résultats et obtient les résultats formatés de l'exécution de la procédure 15. On entend par « résultat formaté » un résultat qui est dans un format attendu par celui qui a fait l'appel à l'origine, par exemple l'application principale 13. Un résultat formaté est donc conforme, en terme de type, à un type attendu par celui qui a fait l'appel à l'origine.

### 5.2.5.1 Mise en oeuvre de la sérialisation des appels

On présente par la suite, en relation avec les figures 1B, 3A et 4, une mise en oeuvre du procédé de la sérialisation des appels qui est basée sur l'utilisation d'un noyau applicatif, adapté à son utilisation dans le cadre du procédé d'appel de procédure de l'invention. Dans ce mode de réalisation, la solution proposée s'appuie sur :
- d'une part un "noyau applicatif" (32, 33), tel qu'évoqué précédemment, qui charge un ensemble de modules logiciels (32.1, 32.2, 34, 33.1, 33.2, 35), assure la communication entre ces modules logiciels et le processus applicatif principal (30 et 31), et permet la portabilité de l'ensemble (applicatif principal, ensemble de modules logiciels) ;
- d'autre part, une représentation spécifique des appels de méthode entre les modules logiciels et le processus (à savoir une interface d'appel unique, reposant sur l'utilisation d'une structure de données typée et valuée).

La solution proposée étend le principe du noyau applicatif au niveau du mécanisme d'appel de procédures (encore appelées méthodes ou fonctions) : les modules logiciels (32.1, 32.2, 34, 33.1, 33.2, 35) n'exposent pas une interface directement manipulée par le processus applicatif principal 30 ou 31 ou les autres modules logiciels.

A la place, les appels sont modélisés par l'appelant 30 (le corps applicatif du processus) avant d'être invoqués, puis transmis au noyau 32, qui les interprète et retrouve la méthode à appeler dans le ou les modules logiciels correspondants (32.1, 32.2 ou 34), et réalise enfin l'appel, si cette procédure est présente au sein d'un des modules chargé dans le processus.

Cette mise en oeuvre de la sérialisation dans le cadre de l'invention est basée sur quatre principes qui sont décrits par la suite : l'appel par spécification, la constance des interfaces binaires, l'utilisation du noyau pour les appels et l'utilisation d'un format générique pour les commandes et les notifications.

### 5.2.5.2 Appel par spécification

Selon les techniques de l'art antérieur, l'interface d'un module logiciel est définie par son interface binaire. C'est-à-dire que l'appelant doit connaître le format des fonctions, procédures, méthodes, pour pouvoir les invoquer, de sorte que si l'appelant ne connaît pas parfaitement l'interface du module, l'appel à des fonctions contenues dans ce module entraîne l'arrêt inopiné ou le blocage de l'application. Cela vient du fait que l'interface des modules logiciels selon l'art antérieur n'est donc pas retranscrite dans leur interface binaire. En d'autres termes, l'interface d'un module logiciel de l'art antérieur n'est pas connue de lui-même. Un module logiciel de l'art antérieur n'est pas à même de s'interroger lui-même pour savoir ce qu'il est capable de faire.

L'invention pallie cet inconvénient de l'art antérieur en permettant, à l'aide d'au moins une interface binaire constante qui autorise un mécanisme de « questionnement ». Un tel mécanisme, selon l'invention, peut être mis en oeuvre de différentes manières, qui varient en fonction notamment des performances attendues de la part des modules logiciels.

L'interface d'un module logiciel selon l'invention est ainsi définie par l'ensemble des commandes qu'il traite et des notifications qu'il lève. Cette interface est définie par spécification (définition d'une sorte de "protocole"), de sorte que si cette dernière évolue, l'interface binaire du module logiciel, elle, reste constante.

Les modifications de l'interface définie par spécification sont donc sans impact pour l'appelant.

### 5.2.5.3 Interfaces binaires constantes

L'interface du noyau applicatif (le noyau 32 et le noyau 33) est composée, dans ce mode de réalisation (figure 3B et figure 4), d'un ensemble de classes permettant de modéliser les appels de méthode ("commandes" et "notifications") : il s'agit des APIs (de l'anglais « application programming interface » pour « interface de programmation d'application ») de commande et de notification.

L'interface binaire des modules logiciels (32.1, 32.2, 34, 33.1, 33.2, 35) est composée uniquement d'un ensemble restreint de symboles (c'est-à-dire de fonctions/variables exportées par le module logiciel) permettant aux noyaux applicatifs (32, 33) de charger le module logiciel, et de lui soumettre des commandes.

Ces interfaces sont définies et n'évoluent pas. Les noyau applicatif (32, 33) et les modules logiciels (32.1, 32.2, 34, 33.1, 33.2, 35) ont donc une interface de programmation (API) et une interface binaire (ABI, de l'anglais « application binary interface ») constantes.

La construction des commandes et notifications par l'appelant (processus 30, 31) s'appuie exclusivement sur les API exportées par le noyau applicatif (32, 33) utilisé (APIs de commande et notification). Par définition, dans ce mode de réalisation de l'invention, l'appelant n'utilise aucune API des modules logiciels (32.1, 32.2, 34, 33.1, 33.2, 35), mais uniquement celles du noyau applicatif (32, 33), comme cela est expliqué ci dessous.

### 5.2.5.4 Appels au travers du noyau

Les commandes et les notifications sont créées par le processus appelant (celui qui souhaite obtenir un service ou une fonctionnalité), puis transmises au noyau applicatif. Ce noyau applicatif trouve les modules logiciels capables de traiter la commande, ou les abonnés capables de traiter la notification, et leur soumet la commande et/ou notification pour effectuer les traitements adéquats. Un abonné est une application ou un module logiciel qui souhaite être informé d'un évènement par le biais d'une notification. L'abonné réalise donc un traitement lorsqu'il reçoit une notification.

L'appel effectif de la procédure correspondant à une commande dans un module logiciel est réalisé par le module logiciel lui-même. En d'autres termes, le noyau transmet la commande au module logiciel qui traite cette commande et exécute la procédure qui y est associée.

En d'autres termes, en utilisant les interfaces binaires constantes, on réalise une extraction à partir de la structure de données passée en paramètre et on procède, au sein même du module logiciel à un « questionnement » pour savoir si le module est apte à exécuter la fonction demandée (dont le nom est extrait de la structure de données d'appel). Si c'est le cas, alors le module appelle *lui-même* la fonction ou la procédure requise. L'appel réel de la fonction n'est donc pas réalisé par le module logiciel appelant (ou l'application appelante), mais par le module logiciel appelé.

Suivant le même principe que pour les modules logiciels, principe selon lequel le module appelle lui-même la procédure correspondant à une commande, les « callbacks » (codes exécutables passés en argument à un autre code exécutable) correspondant à une notification sont appelés par le « listener » (celui qui attend la notification) lui-même.

Le fait que l'appelé (module logiciel dans le cas d'une commande ou "listener" dans le cas d'une notification) réalise lui-même l'appel permet d'assurer, au moment de la compilation, que l'appel est correct.

### 5.2.5.5 Mise en oeuvre

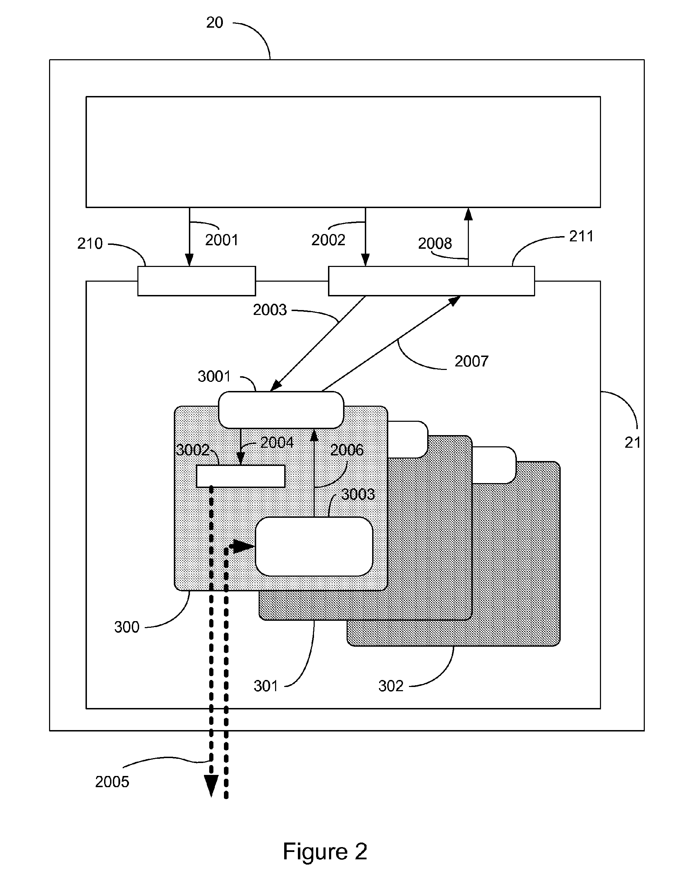

On présente, en relation avec la figure 2, une illustration de la mise en oeuvre du procédé de l'invention sur un module logiciel implémentant le protocole HTTP.

Dans ce mode de réalisation, une application 20 utilise un noyau 21 (sous la forme d'un module logiciel), qui présente à cette application une interface générique simplifiée (« CommandAPI » 210 et « ExecuteAPI » 211). Ce noyau 21 comprend également des modules logiciels 300, 301 et 302. Le module logiciel 300, désigné également ML_{MRPC} 300, implémente le protocole MRPC, selon l'invention, c'est-à-dire qu'il est apte à transférer l'appel d'une procédure à un processus distant. Ce module logiciel ML_{MRPC} 300 exporte une interface 3001 « ExécuteAPI » binaire, constante. Il n'y a donc pas, comme dans les technique des l'art antérieur, une interface complexe. Les autres modules logiciels exportent également, selon l'invention, cette interface « ExecuteAPI » 3001. Le module logiciel ML_{MRPC} 300 contient une procédure « de transfert » 3002 qui exécute un transfert de l'appel d'une fonction (par exemple « http_get ») vers un autre processus distant apte à exécuter cette procédure. Cette procédure « http_get » n'est pas exportée par le module logiciel ML_{MRPC} 300.

Dans ce mode de réalisation, l'enchaînement des actions conduisant au transfert de l'appel de la procédure « http_get » par le module logiciel ML_{MRPC} 300 est le suivant :
- L'appelant (ici, l'application) 20 construit (2001) la représentation spécifique de l'appel à réaliser, en s'appuyant uniquement sur l'interface « CommandAPI » 210 du noyau 21.
- La commande est transmise (2002) au noyau 21 au travers de son API d'exécution (en invoquant la méthode « ExecuteAPI » 211).
- Le noyau 21 ne trouve aucun module logiciel apte à exécuter la commande, parmi les modules logiciels chargés 301, 302. Il transfère donc (2003), en dernier lieu, l'appel de cette procédure au module logiciel ML_{MRPC} 300.
- Le module logiciel ML_{MRPC} 300 identifie la méthode de transfert à appeler et sérialise (2004) l'appel de la procédure « http_get » 3002 (c'est-à-dire qu'il transforme les paramètres en série, sous la forme d'un flux XML).
- Le module logiciel ML_{MRPC} 300 transmet (2005) la représentation de l'appel au processus distant et attend un retour (sous la forme d'une représentation de retour 3003).
- Le module logiciel ML_{MRPC} 300 rend la main (2006, 2007) au noyau 21 qui rend lui-même la main (2008) à l'appelant 20. Celui-ci peut alors traiter le résultat.

On présente ci-après un exemple de code (C++) de construction de la commande et d'analyse du résultat en utilisant la « CommandAPI » du noyau :

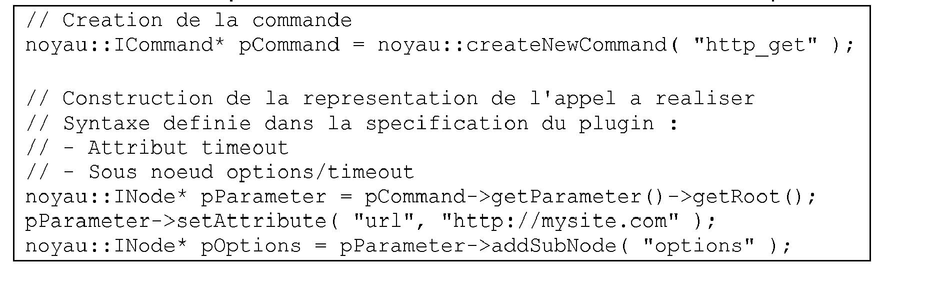

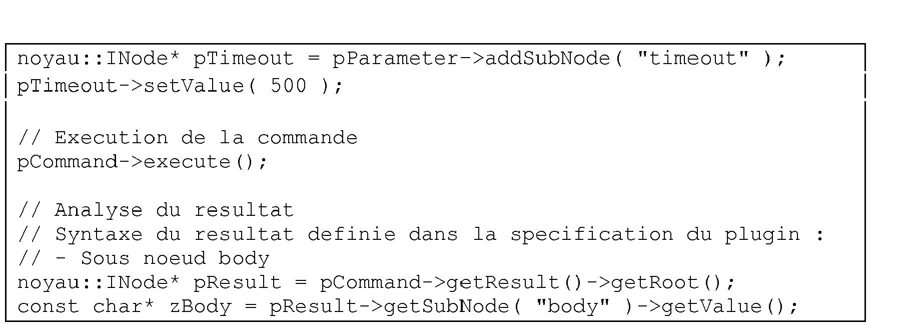

On rappelle que selon l'invention, l'interface des modules logiciels (300, 301, 302) est générique. Ce principe est donc mis en oeuvre pour le module logiciel ML_{MRPC} 300. En d'autres termes, il n'est pas nécessaire de modifier la construction de la commande sous prétexte que cette commande va être traitée par un processus distant. En effet, l'invention permet d'uniformiser les appels de procédure de sorte que l'appel d'une procédure, réalisé par une application appelante 20 (ou un module logiciel appelant), est traité de la même manière par le noyau applicatif 21, qu'il s'agisse d'un appel à un module logiciel local (301, 302) ou à un module logiciel distant. Ainsi, le module logiciel ML_{MRPC} 300 sérialise la représentation formelle et typée de l'appel à réaliser, cette représentation spécifique étant une instance d'une structure générique de données (arbre, liste...).

La sérialisation des données de la représentation spécifique permet de résoudre les problèmes d'incompatibilité de compréhension de type entre les différents processus. Par exemple, un entier sous le système « Windows » n'est pas forcément représenté de la même manière sous le système « Linux ». L'invention permet de pallier les problèmes liés à ces différentes interprétations en donnant un type et une valeur aux paramètres (par exemple l'entier), au sein de la structure générique de données.

### 5.2.6 Mise en oeuvre d'un masquage de la génération des

### représentations d'appel et de retour

Dans une variante de réalisation de l'appel de procédure tel que décrit précédemment, en référence à la figure 2, plutôt que de laisser au module logiciel appelant (l'application 20) la responsabilité de construire les arbres d'appel, de lire des arbres résultats (commandes) ou d'analyser des n-uplets (notifications), comme cela est présenté ci-dessus, une technique d'encapsulation permet de masquer ces opérations.

Elle s'appuie sur la définition d'un ensemble de classes de commande (une par commande), décrites dans une série de fichiers d'entête (.h) uniquement, donc en code "inline", c'est-à-dire en code embarqué par l'appelant. Un tel code s'appuie lui-même sur l'interface « CommandAPI » du noyau.

On présente ainsi, à titre d'exemple, un fichier « .h » définissant la commande « http_get ». Ce fichier est fourni avec les modules logiciel (300, 301, 302) (il s'agit donc d'un élément de l'interface du « plugin » définie par spécification) :

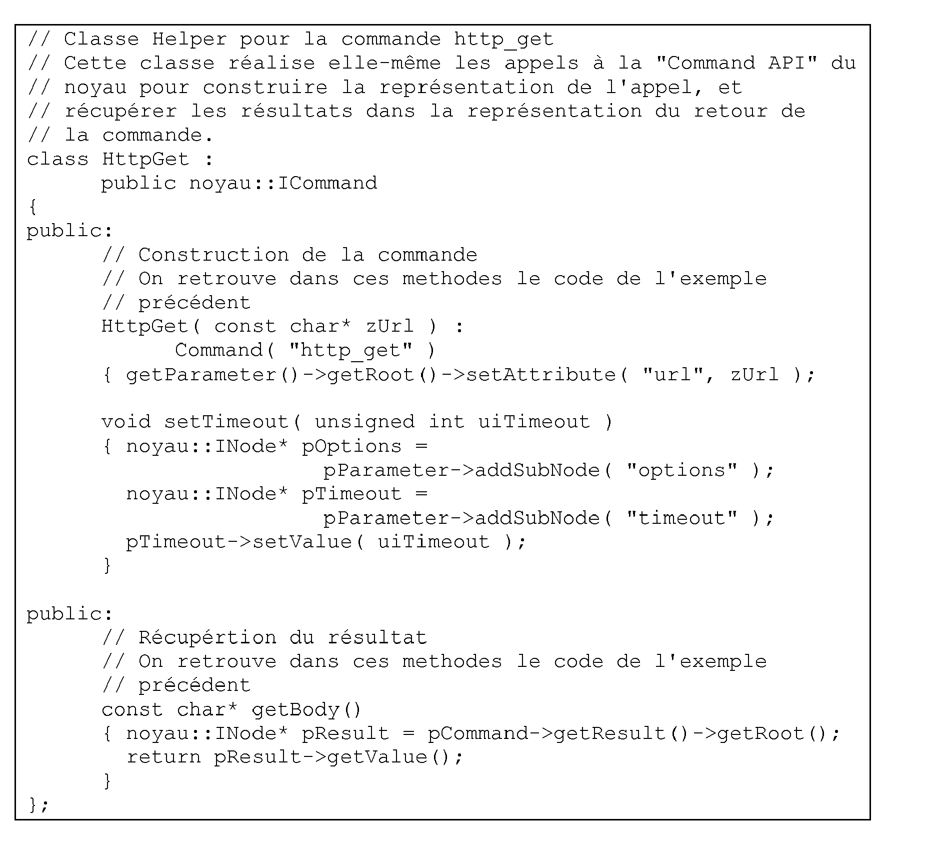

L'utilisation de cette classe d'encapsulation permet de simplifier et de fiabiliser l'appel à la commande « http_get » de l'exemple précédent à partir de l'application appelante :

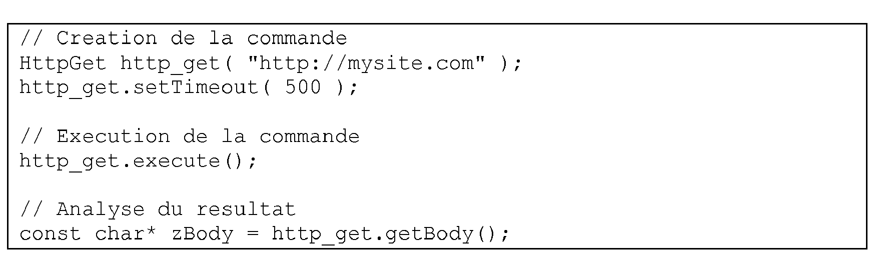

Les deux exemples sont strictement équivalents. Ainsi, le mécanisme de transfert de l'appel de procédure est rendu encore plus indétectable. En effet, l'application appelante 20 se contente de créer la commande, de l'exécuter et d'analyser le résultat, sans qu'à aucun moment elle n'ait eu connaissance de l'exécution de la procédure « http_get » en dehors du processus de l'application appelante 20 tout en restreignant la quantité de code à insérer dans l'application appelante 20.

Remarque : un mécanisme similaire peut être conçu pour les notifications, mais il n'est pas détaillé ici.

### 5.2.7 Protocole MRPC basé sur la sérialisation

Toujours en relation avec la figure 2, lorsque l'étape de recherche des procédures disponibles au sein du processus local a permis d'établir qu'aucun des modules chargés ne peut exécuter la procédure demandée, le noyau 21 transfère (3001) l'appel de procédure au module logiciel MRPC 300 chargé au sein du processus.

Ce module logiciel MRPC transforme (2004), par l'intermédiaire d'une fonction de transfert 3002, la représentation spécifique de l'appel en un flux sérialisé XML transmis au module logiciel MRPC serveur. En d'autres termes, dans ce mode de réalisation, le protocole MRPC permet l'échange de commandes et de notifications entre deux processus. Il s'appuie sur le fait que les commandes et notifications n'utilisent que les types simples du langage, ce qui les rend sérialisables, c'est-à-dire représentables sous forme textuelle, et transportables d'un espace mémoire à un autre. Cet aspect de sérialisation est décrit par la suite.

Ainsi, dans ce mode de réalisation, le protocole MRPC est un protocole texte, sous forme de flux XML. Par exemple, la commande suivante (préalablement sérialisée) :

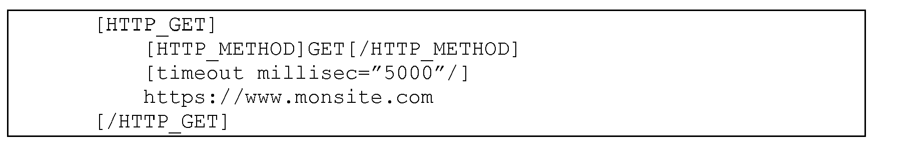

est transformée en un paquet MRPC :

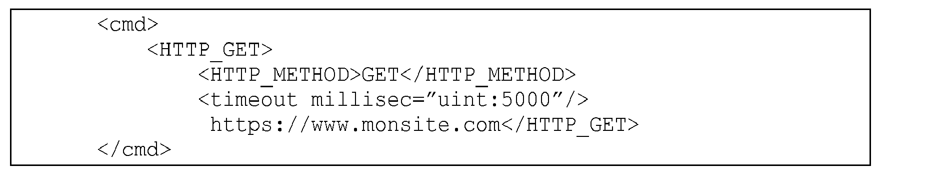

Pour ce qui est des notifications, la notification suivante :

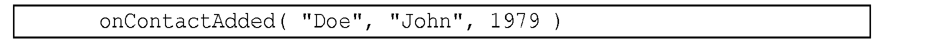

est transformée en un paquet MRPC :

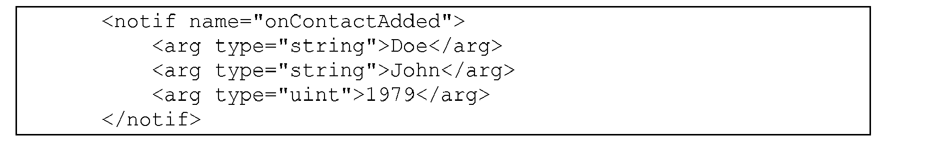

### 5.2.8 Portabilité et interopérabilité

L'interopérabilité entre modules hétérogènes (dont les modules MRPC qui peuvent fonctionner dans des environnements d'exécution différents) est permise par la mise en oeuvre de la sérialisation des appels. Comme cela a déjà été mentionné, la sérialisation permet de transformer une représentation interne en mémoire, dépendante du système d'exploitation, en une représentation universelle et donc indépendante du système. Ainsi par exemple, la sérialisation d'un appel peut être implémentée de plusieurs manières différentes au sein d'un noyau, en fonction du système sur lequel le noyau doit fonctionner, mais le résultat de cette sérialisation sera toujours le même, quel que soit le système. Le résultat de la transformation de l'appel sérialisé en flux XML sera également le même, quel que soit le système.

De plus, le protocole d'échange à base de XML, qui est mis en oeuvre entre les modules MRPC, est indépendant du système d'exploitation, ce qui garantit son interopérabilité entre systèmes d'exploitation différents.

De plus, compte tenu de l'architecture logicielle mise en oeuvre, une simple recompilation suffit à rendre utilisable un module logiciel MRPC sur un système sur lequel il n'a pas été créé. En d'autres termes, le module logiciel MRPC est créé une seule fois sur une plateforme de développement et compilé en fonction du système de destination, sans qu'il soit nécessaire de modifier le code du module.

Une compilation sous « Windows » suffit à rendre le module utilisable sous « Windows », tandis qu'une compilation sous « Linux » suffit à rendre le module utilisable sous « Linux ».

Ainsi, le module logiciel MRPC selon l'invention peut être vu comme une « porte de sortie » universelle permettant à une application (par l'intermédiaire de son noyau applicatif) de faire exécuter des procédures qui sont disponibles au sein d'autres applications (distantes) de manière transparente. De même, le module logiciel MRPC selon l'invention peut être vu comme une « porte d'entrée » universelle permettant à une application distante de demander à une application d'exécuter une procédure disponible au sein d'un module logiciel local.

## Revendications

1. Procédé de réalisation d'un appel d'une procédure présente au sein d'au moins un premier module logiciel et requise par un deuxième module logiciel, dit module logiciel appelant,
**caractérisé en ce qu'**il met en oeuvre une méthode générique d'invocation de procédure, apte à appeler ladite procédure parmi une pluralité de procédures disponibles, en fonction d'un identifiant de ladite procédure à appeler,
ledit module logiciel appelant et ladite méthode générique étant exécutables au sein d'un premier espace d'exécution d'un premier processus, dit espace local, et **en ce qu'**il comprend :
- une étape de recherche, à l'aide dudit identifiant, de ladite procédure parmi un ensemble de modules logiciels chargés au sein dudit espace local, fournissant une information de présence ;
- une étape d'exécution de ladite méthode générique, entraînant un transfert dudit appel vers un troisième module logiciel dudit espace local, dit module de transfert, lorsque ladite information de présence est négative ;
- une étape de transfert dudit appel par ledit module de transfert vers un second espace d'exécution d'un second processus, dit espace distant.

2. Procédé de réalisation d'un appel selon la revendication 1, **caractérisé en ce qu'**il comprend, préalablement à ladite étape de recherche :
- une étape de construction d'une représentation spécifique dudit appel de ladite procédure, sous la forme d'un ensemble structuré de données comprenant au moins ledit identifiant de ladite procédure ;
- une étape de paramétrage de ladite méthode générique à partir de ladite représentation spécifique construite.

3. Procédé de réalisation d'un appel selon la revendication 2, **caractérisé en ce que** ladite étape de transfert comprend :
- une étape de sérialisation, par ledit troisième module logiciel, de ladite représentation spécifique, délivrant une structure de données sérialisée ;
- une étape de transmission de ladite structure de données sérialisée vers un quatrième module logiciel s'exécutant au sein dudit espace distant.

4. Procédé de réalisation d'un appel selon l'une quelconque des revendications 2 et 3, **caractérisé en ce que** ladite représentation spécifique comprend au moins un paramètre nécessaire audit appel et **en ce que** ledit au moins un paramètre comprend :
- un type dudit paramètre, appartenant à un ensemble de types prédéterminés ;
- une valeur dudit paramètre.

5. Procédé de réalisation d'un appel selon la revendication 3, **caractérisé en ce que** ladite structure de données sérialisée est construite selon le format XML.

6. Procédé de réalisation d'un appel selon l'une quelconque des revendications 3 à 5, **caractérisé en ce qu'**il comprend, postérieurement à ladite étape de transfert :
- une étape de déconstruction d'une structure de données représentative d'au moins un résultat fourni par ledit quatrième module logiciel, fournissant au moins un résultat formaté ;
- une étape de traitement, par ledit module logiciel appelant, dudit au moins un résultat formaté.

7. Procédé de traitement d'un appel d'une procédure présente au sein d'au moins un premier module logiciel et requise par un deuxième module logiciel, dit module logiciel appelant, comprenant une étape de transfert dudit appel par un troisième module logiciel s'exécutant au sein d'un premier espace d'exécution d'un premier processus,, **caractérisé en ce qu'**il comprend en outre, dans un second espace d'exécution d'un second processus :
- une étape de réception dudit appel, sous la forme d'une structure de données, au sein d'un quatrième module logiciel ;
- une étape de recherche, au sein dudit second espace d'exécution, dudit au moins un premier module logiciel possédant une référence à ladite procédure, fournissant une information de présence ;
- une étape de mise en oeuvre de ladite procédure, au sein dudit premier module logiciel, lorsque ladite information de présence est positive.

8. Procédé de traitement selon la revendication 7 **caractérisé en ce que** ladite structure de données est sérialisée,
**en ce que** ledit procédé comprend, préalablement à ladite étape de recherche, une étape de déconstruction de ladite structure de données sérialisée, fournissant au moins un paramètre d'appel,
et **en ce que** ladite étape de mise en oeuvre comprend une étape d'exécution de ladite procédure à l'aide dudit au moins un paramètre d'appel.

9. Procédé de traitement selon l'une quelconque des revendications 7 et 8,
**caractérisé en ce que** ladite étape de mise en oeuvre comprend en outre :
- une étape de construction d'une structure de données représentative d'au moins un résultat d'une exécution de ladite au moins une procédure ;
- une étape de transmission de ladite structure de données représentative dudit au moins un résultat, vers ledit module logiciel appelant.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de réalisation d'un appel selon l'une au moins des revendications 1 à 6, lorsqu'il est exécuté sur un ordinateur.

11. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de traitement selon l'une au moins des revendications 7 à 9, lorsqu'il est exécuté sur un ordinateur.

12. Système de réalisation d'un appel d'une procédure présente au sein d'au moins un premier module logiciel et requise par un deuxième module logiciel, dit module logiciel appelant,
**caractérisé en ce qu'**il comprend :
- des moyens de mise en oeuvre d'une méthode générique d'invocation de procédure, apte à appeler ladite procédure parmi une pluralité de procédures disponibles, en fonction d'un identifiant de ladite procédure à appeler,
- des moyens d'exécution dudit module logiciel appelant et de ladite méthode générique au sein d'un premier espace d'exécution d'un premier processus, dit espace local,
- des moyens de recherche de ladite procédure parmi un ensemble de modules logiciels chargés au sein dudit espace local, fournissant une information de présence ;
- des moyens d'exécution de ladite méthode générique, entraînant un transfert dudit appel vers un troisième module logiciel dudit espace local, dit module de transfert, lorsque ladite information de présence est négative ;
- des moyens de transfert dudit appel par ledit module de transfert vers un second espace d'exécution d'un second processus, dit espace distant.

13. Système de réalisation d'un appel selon la revendication 12, **caractérisé en ce qu'**il comprend :
- des moyens de réception dudit appel, sous la forme d'une structure de données, au sein d'un quatrième module logiciel ;
- des moyens de recherche, au sein dudit second espace d'exécution, dudit au moins un premier module logiciel possédant une référence à ladite procédure, fournissant une information de présence ;
- des moyens de mise en oeuvre de ladite procédure, au sein dudit premier module logiciel, lorsque ladite information de présence est positive.
